# EUROPEAN PATENT SPECIFICATION

(11) **EP 3 373 573 B1**
(45) Date of publication and mention of the grant of the patent: **06.12.2023**
(21) Application number: 16861889.0
(22) Date of filing: 11.10.2016
(51) Int. Cl.: G03B 13/36, G03B 35/08, G06T 1/00, G06T 7/20, G06V 20/58, H04N 23/45, H04N 23/60, H04N 23/68

(54) **IMAGE CAPTURING DEVICE**
BILDERFASSUNGSVORRICHTUNG
DISPOSITIF DE CAPTURE D'IMAGE

(30) Priority: 04.11.2015 JP 2015216261
(43) Date of publication of application: 12.09.2018
(73) Proprietor: Hitachi Astemo, Ltd., Hitachinaka-shi, Ibaraki 312-8503 (JP)
(72) Inventor: SANO, Satoshi, Tokyo 100-8280 (JP); INATA, Keisuke, Tokyo 100-8280 (JP); NONAKA, Shinichi, Hitachinaka-shi Ibaraki 312-8503 (JP)
(74) Representative: Strehl Schübel-Hopf & Partner
(86) International application number: PCT/JP2016/080145
(87) International publication number: WO 2017/077822

(56) References cited:
- JP-A- 2006 134 035
- JP-A- 2010 273 178
- US-A1- 2007 165 967
- US-A1- 2014 118 504

## Description

### Technical Field

The present invention relates to an imaging apparatus.

### Background Art

As a technical background in this technical field, there is a method of calculating a distance between a camera and a subject by using a stereo camera and performing a recognition process of the subject. For example, in PTL 1, it is described that "a configuration including a first imaging unit, a second imaging unit, an object region specification processing unit that specifies a presence region of a recognition object and a type of the recognition object from a first image acquired from the first imaging unit, a distance calculation processing unit that calculates a distance to the recognition object from an image of the presence region of the recognition object from the object region specification processing unit and a second image acquired from the second imaging unit, a feature calculation processing unit that calculates a feature amount in a real space of the recognition object based on the distance calculated by the distance calculation processing unit and the presence region of the recognition object obtained by the object region specification processing unit, and an object feature verification processing unit that verifies the type of the recognition object specified by the object region specification processing unit based on the feature amount calculated by the feature calculation processing unit is implemented".

### Citation List

### Patent Literature

PTL 1: JP-A-2014-67320

US 2007/165967 A1 discloses an imaging apparatus with the features in the preamble of present claim 1. Another conventional imaging apparatus is described in US 2014/118504 A1.

### Summary of Invention

In PTL 1, a result acquired by using one of a plurality of cameras imaging a stereo image as a monocular camera and specifying a vehicle region from an image imaged by the monocular camera is used in an object feature detection process in the stereo image such that the accuracy of object feature detection is improved. However, there is a problem that the analysis of the stereo image cannot be applied to an image analysis process of the monocular camera, such that there is room for improvement. In view of the above problems, an object of the present invention is to provide a method for improving the accuracy of image analysis by applying an analysis result of the stereo image to the image analysis process of the monocular camera.

### Solution to Problem

In order to solve the above problem, the configuration described in the claims is adopted.

### Advantageous Effects of Invention

According to the invention, in an imaging apparatus having a motion calculation function and a distance calculation function, it is possible to provide a high precision motion calculation function.

### Brief Description of Drawings

[Fig. 1] Fig. 1 is an example of a configuration of an imaging apparatus.
[Fig. 2] Fig. 2 is an example of a motion calculation process flow.
[Fig. 3] Fig. 3 is an example of an unnecessary motion information removal process flow.
[Fig. 4] Fig. 4 is an example of a distance calculation process flow.
[Fig. 5] Fig. 5 is an example of a motion detection result.
[Fig. 6] Fig. 6 is an example of the motion detection result.
[Fig. 7] Fig. 7 is an example of a distance relationship between the imaging apparatus and a subject.
[Fig. 8] Fig. 8 is an example of a processed result of an imaged image.
[Fig. 9] Fig. 9 is an example of a configuration of the imaging apparatus.
[Fig. 10] Fig. 10 is an example of a prediction of distance information.

### Description of Embodiments

### [Example 1]

Hereinafter, a first embodiment of the invention will be described with reference to the drawings.

### <Overall Configuration of Imaging Apparatus>

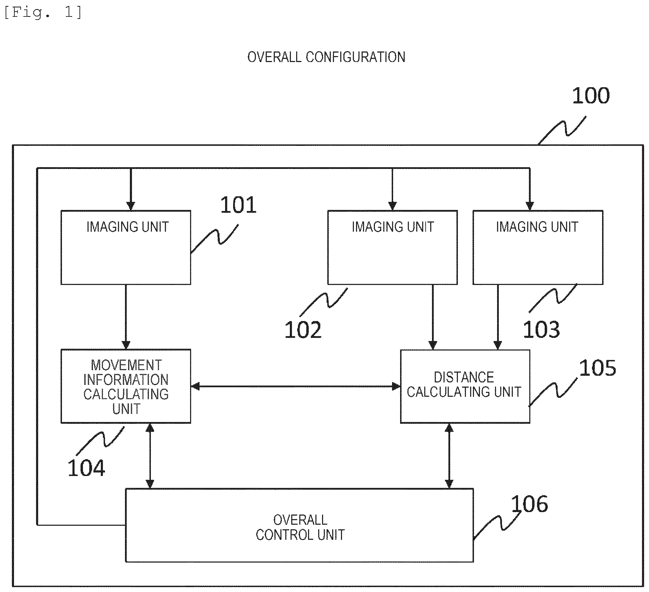

Fig. 1 is a configuration diagram of an imaging apparatus 100 in the present example.

Imaging units 101, 102, and 103 include a lens and an image sensor, and generate an image signal by photoelectrically converting light received by the image sensor. The imaging units 101, 102, and 103 generate and output images at a predetermined time interval according to a frame rate designated by an overall control unit 106. In addition, the imaging units 101, 102, and 103 are installed to be able to acquire images of almost the same field angle, furthermore, the imaging unit 102 and the imaging unit 103 are installed by side at a predetermined distance, and can calculate a distance from parallax of the imaged image to a subject.

A movement information calculating unit 104 detects a movement amount and a movement direction of the subject by an image signal of the imaging unit 101 as an input. As a method of detecting the movement amount and the movement direction, for example, there is the following method. The movement information calculating unit 104 captures the image signal from the imaging unit 101, and detects a temporal change in the captured image. As a method of detecting a temporal change, for example, there is a block matching method.

The movement information calculating unit 104 holds, for example, a plurality of image signals of a plurality of frames which are continuous in time of the imaging unit 101, and searches for a block region of a predetermined size obtained by cutting out a part of an image in which the subject the same as the block region is shown, in up and down, left and right directions on the next image. Then, the difference between a position that coincides with the block region and a position where the block region is present in the original image is the movement amount and movement direction of the block region. As a method of coincidence comparison, there is a method of finding a position where the total sum of luminance differences of pixels in the block region is small, or the like.

By sequentially processing the image signal output in time series from the imaging unit overall images, it is possible to acquire the temporal movement amount and movement direction of the subject. Furthermore, in a case where the imaging apparatus 100 moves, it is possible to detect a moving object that is actually moving by removing a background movement amount caused by the movement.

For example, for estimation of background movement, there is a non-patent literature: Masahiro Kiyohara, et al., "Development of mobile object detection technology for monitoring the vicinity of a vehicle" Practice Workshop on VIEW Vision Technology Actual Workshop (2011) pp. 59-63. A calculation result of the movement information calculating unit 104 is, for example, a vector quantity indicating the direction and magnitude of movement for each block region. However, the method of detecting the movement of the subject is not limited to this.

A distance calculating unit 105 detects a distance of the subject, based on the image signals of the imaging unit 102 and the imaging unit 103 as inputs. As a method of detecting the distance, there are, for example, the following methods. The distance calculating unit 105 takes in the image signals output from the imaging unit 102 and the imaging unit 103, and corrects the image signal with correction values that are measured in advance so as to match the luminance of each image signal. In addition, the image signal is corrected by a previously measured correction value such that a horizontal position of the image signal of each imaging unit is matched.

Next, calculation parallax is performed. As described above, since the imaging unit 102 and the imaging unit 103 are installed apart from each other with a predetermined distance left and right, the imaged image has a parallax in a horizontal direction. For example, this parallax is calculated using a block matching method. For example, the distance calculating unit 105 searches for a region corresponding to a block region of a predetermined size cut out from the image signal of the imaging unit 102 in the horizontal direction on the image signal of the imaging unit 103. Difference between a position on the image signal of the imaging unit 103 where the searched block region is present and a position on the image signal of the imaging unit 102 where the searched block region is present is the parallax.

This is done over the entire image. As a method of the coincidence comparison, for example, a position at which the sum of luminance differences of pixels in the block region is reduced is the parallax. It is well known that the distance is obtained from the lens focal length of the imaging unit 102 and the imaging unit 103, the installation distance between the imaging unit 102 and the imaging unit 103, the parallax obtained in the above, and a pixel pitch of an imaging sensor. However, a distance calculation method is not limited to this.

The overall control unit 106 performs settings such as frame rate designation and exposure control as settings for generating video signals for the imaging units 101, 102, and 103. In addition, the overall control unit 106 notifies the movement information calculating unit 104 of setting information of the imaging unit 101, and notifies the distance calculating unit 105 of setting information relating to imaging control of the imaging unit 102 and the imaging unit 103. In addition, the overall control unit 106 notifies the movement information calculating unit 104 and the distance calculating unit 105 of each operation timing, and information such as movement speed of the imaging apparatus 100.

### <Movement Information Calculation Process>

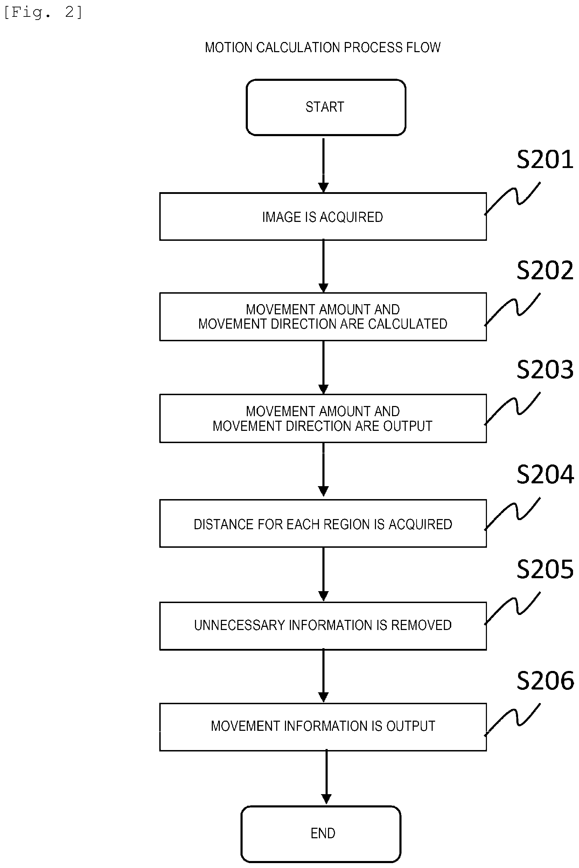

A movement information calculation process in the movement information calculating unit 104 of the imaging apparatus 100 of the present invention will be described by using a process flow shown in Fig. 2.

In S201, the movement information calculating unit 104 acquires the image signal output from the imaging unit 101 according to a frame rate designated by the overall control unit 106. In this case, from an angle of view and pixel pitch of the imaging unit 101, a distance to be a target region of a motion detection process, movement speed and the movement amount of a detection target object, and movement speed of the imaging apparatus, a necessary frame rate required for providing a condition is calculated. In a case where the imaging unit 101 is operated in a frame rate higher than the necessary frame rate, it is possible to reduce a process load by thinning out some frames within a range that satisfies the necessary frame rate without processing all frames.

In S202, the movement information calculating unit 104 calculates the movement amount and the movement direction for each predetermined block region in the image signal are calculated with respect to the entire frame by using the latest image signal acquired in S201 and the image signal acquired during the movement information calculation process.

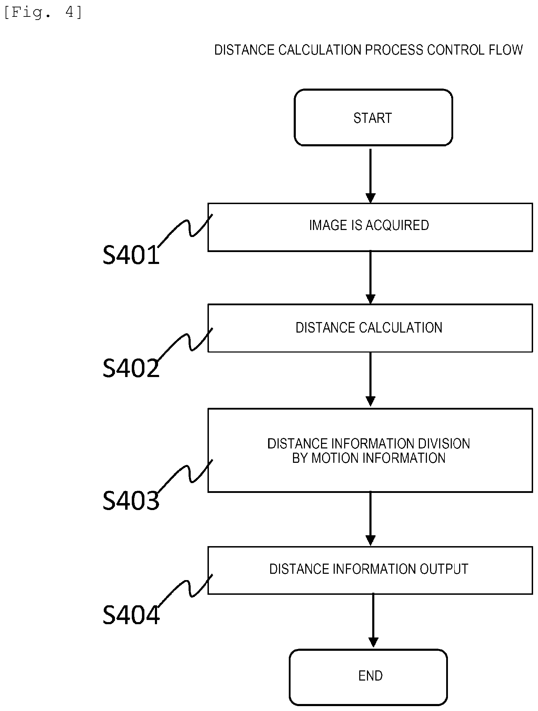

In S203, the movement information calculating unit 104 outputs the movement amount and the movement direction for each block region calculated in S202 to the distance calculating unit 105. As will be described below, the distance calculating unit 105 acquires the movement amount and the movement direction for each block region in S402 of Fig. 4, calculates the distance information based on the movement amount and the movement direction for each block region, and outputs the calculated result to the movement information calculating unit 104.

In S204, the movement information calculating unit 104 acquires the distance information output from the distance calculating unit 105.

In S205, the movement information calculating unit 104 performs a process of generating the movement information by excluding unnecessary elements from the movement amount and the movement direction for each block region calculated in S202 based on the distance information acquired in S204.

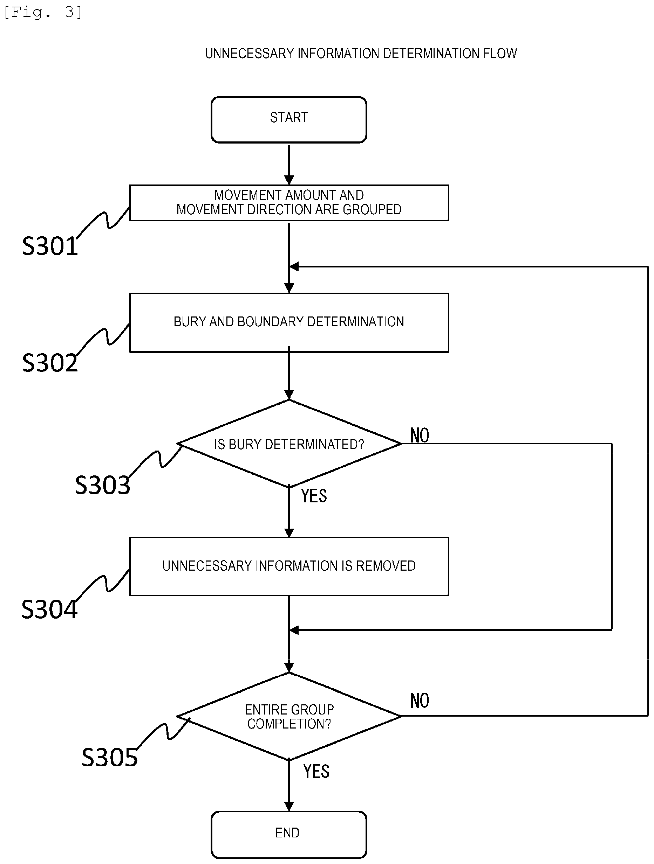

An unnecessary motion removal process will be described by using a process flow shown in Fig. 3.

In S301, the movement information calculating unit 104 calculates the similarity between the movement amount and the movement direction with each blocking present in the vicinity in block units used for calculation of the movement amount and the movement direction with respect to the movement amount and the movement direction for each block region calculated in S202. In a case where the similarity of the movement amount and the movement direction between blocks is equal to or greater than a predetermined threshold, it is determined that compared block is the same group and the same group number is assigned. In a case where the similarity of the movement amount and the movement direction between blocks is equal to or less than the predetermined threshold, it is determined that the compared block is a different group and the different group number is assigned.

In addition, for the blocks for which the movement amount and the movement direction are not detected, a group number meaning no movement is assigned. By performing this process until the group number is assigned in all blocks within the frame, a grouping of the movement amount and the movement direction for each block region is performed. However, the grouping of the movement amount and the movement direction for each block region is not limited thereto. Subsequently, the processes from S302 to S304 are performed with respect to each group.

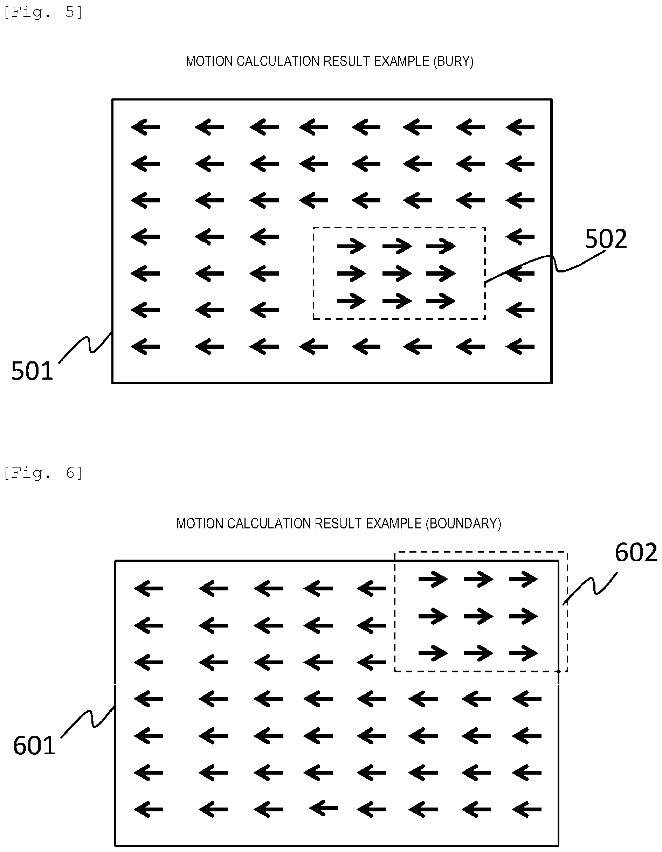

In S302, by using the distance information acquired in S204 and information of a group generated in S301, the movement information calculating unit 104 determines whether or not each group is buried in the same distance region and designates the group to be buried as a buried group. Here, a case of being buried is, for example, a case such as a region 502 with respect to a region 501 exemplified in Fig. 5, and there is a case where a group configured with the movement direction to the left is surrounding a group configured by the movement direction to the right and the distance information of both groups is within a predetermined range.

Meanwhile, even in the case where different groups are present within the same distance range indicated by the distance information, in a case where the group presents in a boundary portion of a range of the distance region, as a region 602 with respect to a region 601 exemplified in Fig. 6, it is not designated to be buried, without determination of the bury. Thereafter, the process proceeds to S303.

In S303, it is checked whether or not a process target group is designated as the buried group in S302, and the process proceeds to S304 in a case of the buried group, otherwise, the process proceeds to S305.

In S304, the movement information calculating unit 104 deletes the process target group determined as the buried group in S302 as being unnecessary information, and the process proceeds to S305. As a deleting method, one of a method of not detecting the movement amount and the movement direction and a method of substituting the movement amount and the movement direction that are representing with a group surrounding the corresponding group and handling as the same group are applied. Which method to apply is designated in advance in the overall control unit 106. Only application of the second alternative (method of substituting) falls under the scope of claim 1.

In S305, it is determined whether or not a deletion determination process performed in S302 to S304 with respect to the entire group in the frame is completed and the process returns to S302 in a case where there is a group that is not performed, and the process performs a process in the next group. In a case where the process with respect to the entire group is completed, the process flow is ended.

An unnecessary information removal process is completed by the above process, and the process proceeds to S206.

In S206, the movement information calculating unit 104 outputs the movement information indicating the movement amount and the movement direction for each group included in a target frame.

### <Distance Calculation Process>

A process of the distance calculating unit 105 will be described by using a process flow shown in Fig. 4.

In S401, the distance calculating unit 105 acquires each video signal output from the imaging unit 102 and the imaging unit 103 according to a frame rate set by the overall control unit 106, and the process proceeds to S402.

In S402, the distance calculating unit 105 calculates the distance between each region in the video frame and the imaging apparatus 100 by the above-described method by using the video signal acquired from the imaging units 102 and 103. In addition, based on the distance for each region, those in which the distance falls within a predetermined range in the adjacent region are determined to be the same distance region group, and a number for identifying the group is assigned.

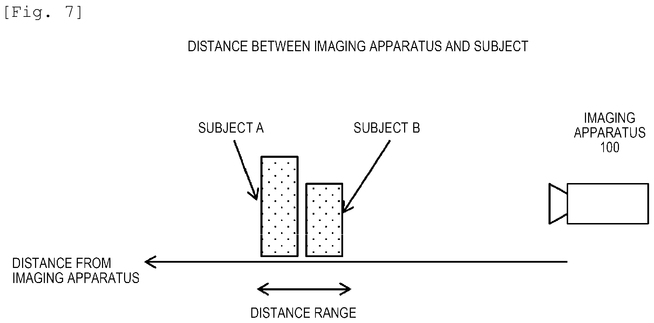

Here, as shown in Fig. 7, a process of determining that it is the same distance region group is a process of determining that the subject A and the subject B are the same distance region group in a case where a distance between the subject A and the imaging apparatus, and a distance between the subject B and the imaging apparatus are within a distance range defined in advance. If the distance between the subject A and the imaging apparatus, and the distance between the subject B and the imaging apparatus are within a range other than the distance range, it is determined that the subject A and the subject B are different groups . This process is performed for the entire region, and grouping is performed based on the distance for each region. Thereafter, the process proceeds to S403.

In S403, the distance calculating unit 105 acquires the movement amount and the movement direction for each block output by the movement information calculating unit 104 in S203 of Fig. 2, and determines whether or not blocks of different movement amounts and movement directions are included in the same group in the distance information calculated in S402. In a case where the blocks of different movement amounts and movement directions are included, it is determined that it is a different object even if at the same distance, the group created in S402 is divided in accordance with the block of the movement amount and the movement direction as a new group, and the process proceeds to S405.

In S404, the distance calculating unit 105 outputs the distance information reflecting a result obtained by dividing the group. A division process of the distance information can also be performed by using the motion information output by the movement information calculating unit 104 in the overall control unit 106 and the distance information calculated by the distance calculating unit 105 in S402.

### <Example of Image Process>

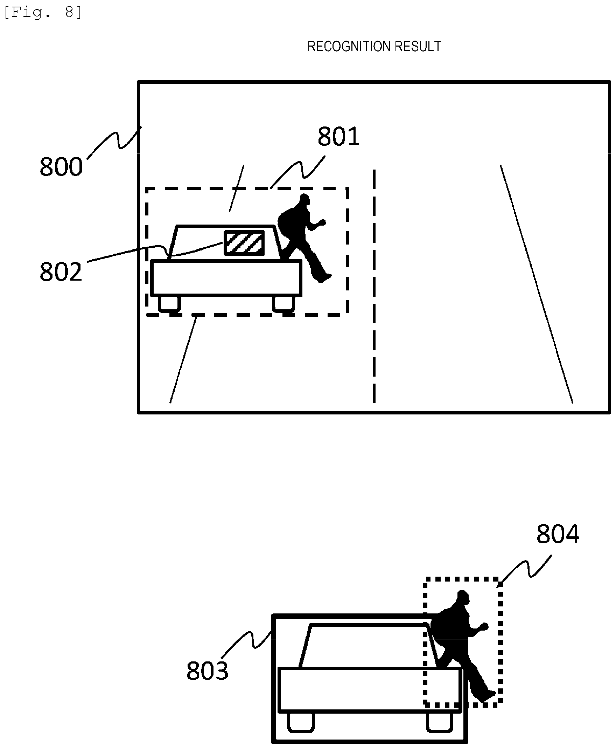

Fig. 8 is an example of a processed result of an imaged image in the present example. When a distance calculation process is performed only by the distance calculating unit 105 on an image 800 of the entire frame, in a case where a distance between a vehicle and a pedestrian is close such as when the pedestrian appears immediately after the vehicle, since a region 801 surrounded by a broken line is recognized as the same distance region, there is a situation that the existence of the pedestrian cannot be detected without distinguishing the pedestrian and the vehicle.

On the other hand, in the movement information calculation process indicated in the present example, the pedestrian is calculated as a group moving in the right direction, it is possible to calculate a stopped vehicle as a group moving in the left direction accompanying the movement of the imaging apparatus 100, and it is possible to divide the region 801 into a region 803 and a region 804.

Furthermore, in a case where the movement information calculation process is performed only by a movement information detection unit 105 on a region 802 formed by reflection of a vehicle body occurring in a vehicle of a distance region 801, although it is calculated as a group moving to the right according to a light source position and movement of the imaging apparatus 100. However, in the movement information calculation process indicated in the present example, since it can be removed as a group buried in the same distance region, it is possible to not perform unnecessary division in the distance calculation process.

So far, by using the method described in the present example, it is possible to detect the movement information with high accuracy by removing unnecessary motion information by using the distance information in the movement information calculation process. Furthermore, by increasing the accuracy of motion detection, it is possible to identify accurately different objects present in the same distance.

In the description of the present example, the video signal imaged by the imaging unit 101 is used for the motion detection process by the movement information calculating unit 104, but the motion detection process independent of the video signal is also possible. For example, it is also possible to use motion information acquired by using an infrared sensor and motion information acquired by using a radar or the like.

### [Example 2]

A second embodiment of the present invention will be described by using the drawings.

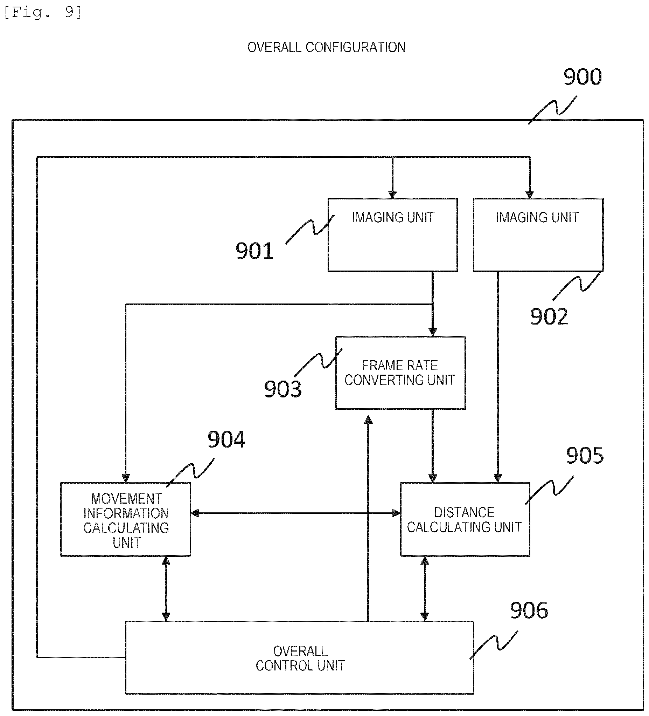

Fig. 9 is a configuration diagram of an imaging apparatus 900 in a second example of the present invention. Unlike the first example, without providing an independent imaging unit used in a movement information calculating unit 904, it is possible to configure one imaging unit out of a plurality of imaging units used in distance calculation is used for acquiring the video signal used for motion calculation.

In addition, an imaging unit 901 is configured to image images at a frame rate different from that of an imaging unit 902 for use in the motion calculation.

However, since a distance calculating unit 905 requires video signals imaged at approximately the same time, a frame rate converting unit 903 is added in order to synchronize the video signal output by the imaging unit 901 with the output of the imaging unit 902.

The frame rate converting unit 903 acquires settings relating to the frame rate of the imaging unit 901 and the imaging unit 902 from an overall control unit 906, controls the video signal output from the imaging unit 901 to be the same frame rate as that of the video signal output from the imaging unit 902 based on a ratio of the frame rate of each imaging unit and outputs the controlled result to the distance calculating unit 905.

Since a motion calculation process in the movement information calculating unit 904 and the distance calculation process in the distance calculating unit 905 is the same as the process described in the first example, the description in the present example will be omitted.

So far, by using the method described in the present example, even in a case where the imaging unit using in distance calculation and the imaging unit using in the movement information calculation process, it is possible to perform subject detection with high accuracy. Furthermore, by increasing the accuracy of the subject detection, it is possible to accurately identify different objects present at the same distance.

The distance information may predict the distance information at the current time by using the distance information calculated by the distance calculating unit 905 in the previous frame and the distance for each block calculated from the latest frame. A prediction method of the distance information will be described in detail.

### <Prediction Process of Distance Information>

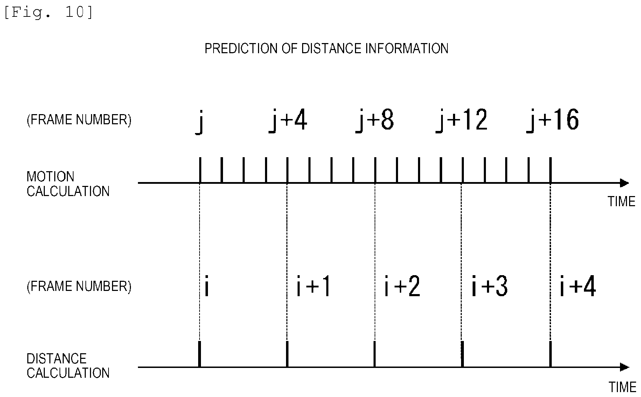

Fig. 10 is a diagram showing a performance timing of the movement information calculation process in the movement information calculating unit 104 and the distance calculation process in the distance calculating unit 105. The movement information calculation process is performed according to a frame rate designated by the overall control unit 106 to the imaging unit 101 and the distance calculation process is performed according to a frame rate designated by the overall control unit 106 to the imaging unit 102 and the imaging unit 103.

Fig. 10 is an example of a process timing in a case where the frame rate of the distance calculation process is designated as four times the frame rate of the movement information calculation process. However, the frame rate setting is not limited to this ratio.

In a case where the distance calculating unit 105 uses the distance information calculated in the most recent frame, for example, in a case where a frame number of the movement information calculation is used in processes between j+1 to j+4, the distance information used by the movement information calculating unit 104 in the movement information calculation process uses the distance information calculated by a distance calculating unit with a frame number i. On the other hand, in a case where the distance information at a timing of performing the movement information calculation process is predicted and used, for example, in a case where the frame number of the movement information calculation is j+6, the distance information of the (i+1)-th frame which is the most recent frame in which the distance calculation process is performed and the distance information at the i-th frame in which the previous distance calculation process is performed are used.

A difference between the i-th distance information and the (i+1)-th distance information is acquired, the difference is divided by a ratio of the frame rates of the movement information calculation process and the distance calculation process, and calculates a destination of each distance region based on a divided value and the number of elapsed frames from the previous distance information And. In addition, the movement information calculating unit 104 can also acquire the movement speed of the imaging apparatus 100 from the overall control unit 106, and increase or decrease a prediction value acquired by dividing with a steam process according to a change in the movement speed. By the above processes, it is possible to reduce a calculation amount for distance information prediction. In addition, by predicting the distance information, it is possible to perform the movement information calculation with higher accuracy.

### Reference Signs List

- 100:: imaging apparatus
- 101:: imaging unit
- 102:: imaging unit
- 103:: imaging unit
- 104:: movement information calculating unit
- 105:: distance calculating unit
- 106:: overall control unit
- 501:: region (motion information)
- 502:: region (motion information to be buried)
- 601:: region (motion information)
- 602:: region (motion information of boundary region)
- 800:: image (entire imaged image)
- 801:: region (the same distance region)
- 802:: region (video region)
- 803:: region (video region)
- 804:: region (video region)
- 900:: imaging apparatus
- 901:: imaging unit
- 902:: imaging unit
- 903:: frame rate converting unit
- 904:: movement information calculating unit
- 905:: distance calculating unit
- 906:: overall control unit

## Claims

1. An imaging apparatus (100) comprising:
a plurality of imaging units (101-103);
a distance calculating unit (105) that is adapted to calculate a distance to a subject by using an image acquired from the plurality of imaging units (101-103), and to output distance information; and
a movement information calculating unit (104) that is adapted to detect a motion of the subject and to output motion information,
wherein, based on the motion information output from the movement information calculating unit (104), the distance calculating unit (105) is adapted to identify different subjects even at the same distance,
**characterised in that**, there is a first region (502, 802) surrounded by a second region (501,801), wherein the motion information in the first region (502, 802) is different from the motion information in the second region (501, 801), and wherein the first region (502, 802) and the second region (501,801) are determined to be within the same distance range from the imaging apparatus (100), then the movement information calculating unit (104) is adapted to determine the motion information of the first region (502, 802) as unnecessary information and remove it from the motion information to be output by substituting the motion information of the first region (502, 802) with the motion information of the surrounding second region (501, 801).

2. The imaging apparatus (100) according to Claim 1, wherein the movement information calculating unit (104) is adapted to calculate the motion information based on a change in time series of images acquired from the plurality of imaging units (101-103).

3. The imaging apparatus (100) according to Claim 1, wherein the movement information calculating unit (104) is adapted not to remove the motion information of a boundary region (602) that is present in the same predetermined distance range from the imaging apparatus (100) as an adjacent region (601) but indicates in a direction different from the motion information of the adjacent region (601), and that is present in a boundary with the subject of another distance.

## Patentansprüche

1. Abbildungsvorrichtung (100), umfassend:
mehrere Abbildungseinheiten (101-103);
eine Entfernungsberechnungseinheit (105), die dazu ausgelegt ist, eine Entfernung zu einem Subjekt unter Verwendung eines Bildes zu berechnen, das von den mehreren Abbildungseinheiten (101-103) erfasst wurde, und um Entfernungsinformation auszugeben; und
eine Bewegungsinformationsberechnungseinheit (104), die dazu ausgelegt ist, eine Bewegung des Subjekts zu erfassen und Bewegungsinformation auszugeben,
wobei die Entfernungsberechnungseinheit (105) dazu ausgelegt ist, auf der Grundlage der von der Bewegungsinformationsberechnungseinheit (104) ausgegebenen Bewegungsinformation auch bei gleichem Abstand verschiedene Personen zu identifizieren,
**dadurch gekennzeichnet, dass**, wenn es einen ersten Bereich (502, 802) gibt, der von einem zweiten Bereich (501, 801) umgeben ist, wobei sich die Bewegungsinformation in dem ersten Bereich (502, 802) von der Bewegungsinformation in dem zweiten Bereich (501, 801) unterscheidet, und wobei der erste Bereich (502, 802) und der zweite Bereich (501, 801) so bestimmt werden, dass sie sich innerhalb des gleichen Entfernungsbereichs von der Abbildungsvorrichtung (100) befinden, die Bewegungsinformations-Berechnungseinheit (104) dann dazu ausgelegt ist, die Bewegungsinformation des ersten Bereichs (502, 802) als unnötige Information zu bestimmen und sie aus der auszugebenden Bewegungsinformation zu entfernen, indem die Bewegungsinformation des ersten Bereichs (502, 802) durch die Bewegungsinformation des umgebenden zweiten Bereichs (501, 801) ersetzt wird.

2. Abbildungsvorrichtung (100) nach Anspruch 1, wobei die Bewegungsinformationsberechnungseinheit (104) dazu ausgelegt ist, die Bewegungsinformation auf der Grundlage einer Änderung in der Zeitreihe von Bildern zu berechnen, die von den mehreren Abbildungseinheiten (101-103) erfasst wurden.

3. Abbildungsvorrichtung (100) nach Anspruch 1, wobei die Bewegungsinformationsberechnungseinheit (104) dazu ausgelegt ist, die Bewegungsinformation eines Grenzbereichs (602) nicht zu entfernen, der sich im gleichen vorbestimmten Entfernungsbereich von der Bildgebungsvorrichtung (100) wie ein benachbarter Bereich (601) befindet, aber in eine Richtung zeigt, die sich von der Bewegungsinformation des benachbarten Bereichs (601) unterscheidet, und der sich in einem Grenzbereich mit dem Subjekt einer anderen Entfernung befindet.

## Revendications

1. Appareil (100) d'imagerie comprenant :
une pluralité d'unités (101-103) d'imagerie ;
une unité (105) de calcul de distance qui est adaptée à calculer une distance à un sujet en utilisant une image acquise depuis la pluralité d'unités (101-103) d'imagerie, et à délivrer en sortie une information de distance ; et
une unité (104) de calcul d'information de mouvement qui est adaptée à détecter un mouvement du sujet et à délivrer en sortie une information de mouvement,
dans lequel, sur la base de l'information de mouvement délivrée en sortie de l'unité (104) de calcul d'information de mouvement, l'unité (105) de calcul de distance est adaptée à identifier différents sujets même à la même distance,
**caractérisé en ce que**,
s'il y a une première région (502, 802) entourée par une deuxième région (501, 801), dans lequel l'information de mouvement dans la première région (502, 802) est différente de l'information de mouvement dans la deuxième région (501, 801), et dans lequel la première région (502, 802) et la deuxième région (501, 801) sont déterminées être à l'intérieur de la même plage de distance depuis l'appareil (100) d'imagerie, alors l'unité (104) de calcul d'information de mouvement est adaptée à déterminer l'information de mouvement de la première région (502, 802) comme une information non nécessaire et à la supprimer de l'information de mouvement devant être délivrée en sortie en remplaçant l'information de mouvement de la première région (502, 802) par l'information de mouvement de la deuxième région (501, 801) l'entourant.

2. Appareil (100) d'imagerie selon la revendication 1, dans lequel l'unité (104) de calcul d'information de mouvement est adaptée à calculer l'information de mouvement sur la base d'un changement dans une série chronologique d'images acquises depuis la pluralité d'unités (101-103) d'imagerie.

3. Appareil (100) d'imagerie selon la revendication 1, dans lequel l'unité (104) de calcul d'information de mouvement est adaptée à ne pas supprimer l'information de mouvement d'une région limite (602) qui est présente dans la même plage de distance prédéterminée depuis l'appareil (100) d'imagerie comme une région adjacente (601) mais indique dans une direction différente de l'information de mouvement de la région adjacente (601), et qui est présente dans une limite avec le sujet d'une autre distance.
